# EUROPEAN PATENT SPECIFICATION

(11) **EP 1 165 451 B1**
(45) Date of publication and mention of the grant of the patent: **17.09.2003**
(21) Application number: 00920602.0
(22) Date of filing: 28.03.2000
(51) Int. Cl.: C03B 37/012, C03B 37/029

(54) **METHOD AND APPARATUS FOR THE THERMAL TREATMENT OF AN OBJECT SUCH AS AN OPTICAL FIBER PREFORM**
VERFAHREN UND VORRICHTUNG ZUR THERMISCHEN BEHANDLUNG VON FORMKÖRPERN, BEISPIELSWEISE VON EINER VORFORM FÜR OPTISCHE FASERN
PROCEDE ET APPAREIL POUR LE TRAITEMENT THERMIQUE D'UN OBJET TEL QU'UNE PREFORME DE FIBRES OPTIQUES

(30) Priority: 30.03.1999 DE 19914507
(43) Date of publication of application: 02.01.2002
(73) Proprietor: CORNING INCORPORATED, Corning, N.Y. 14831 (US)
(72) Inventor: RUSCHER, Stefan, D-96279 Weidhausen (DE)
(74) Representative: Epping Hermann & Fischer
(86) International application number: EP0002722
(87) International publication number: WO00059838

(56) References cited:
- WO-A-90/13392
- DE-A- 2 738 506
- US-A- 2 736 141
- PATENT ABSTRACTS OF JAPAN vol. 5, no. 62, 25 April 1981 (1981-04-25) & JP 56 014441 A (NT&T CORP.), 12 February 1981 (1981-02-12)
- PATENT ABSTRACTS OF JAPAN vol. 1996, no. 4, 30 April 1996 (1996-04-30) -& JP 07 330362 A (FUJIKURA LTD.), 19 December 1995 (1995-12-19)
- PATENT ABSTRACTS OF JAPAN vol. 17, no. 303, 10 June 1993 (1993-06-10) & JP 05 024877 A (FUJIKURA LTD.), 2 February 1993 (1993-02-02)
- PATENT ABSTRACTS OF JAPAN vol. 16, no. 518, 26 October 1992 (1992-10-26) & JP 04 193732 A (FUJIKURA LTD.), 13 July 1992 (1992-07-13)
- PATENT ABSTRACTS OF JAPAN vol. 11, no. 101, 31 March 1987 (1987-03-31) & JP 61 251536 A (FUJITSU LTD.), 8 November 1986 (1986-11-08)
- PATENT ABSTRACTS OF JAPAN vol. 14, no. 427, 13 September 1990 (1990-09-13) & JP 02 164738 A (FURKAWA ELECTRIC CO. LTD.), 25 June 1990 (1990-06-25)
- PATENT ABSTRACTS OF JAPAN vol. 1, no. 126, 20 October 1977 (1977-10-20) & JP 52 060146 A (FUJITSU LTD), 18 May 1977 (1977-05-18)
- PATENT ABSTRACTS OF JAPAN vol. 13, no. 211, 17 May 1989 (1989-05-17) & JP 01 028239 A (SHIN-ETSU CHEM. CO. LTD.), 30 January 1989 (1989-01-30)

## Description

### Field of the Invention

The invention relates to methods and apparatus for manufacture of optical fiber preforms and optical fiber.

### Background

The starting point of the method for the production of an optical fiber, which consists of a core (refractive index n₁), a cladding (refractive index n₂ < n₁) that surrounds the core concentrically, and a protective plastic layer (single or multi-layers "coating"), and which is used in communications cables as an optical transmission element, is an elongated, cylindrical quartz glass body, doped in accordance with the profile of the desired refractive index. This so-called "preform" is introduced very slowly, by means of a feed device, into the heating chamber of a high-temperature furnace, placed in the upper part of the fiber drawing tower, and heated. At temperatures T > 2000°C, the conically tapering tip of the preform is gradually transformed to a state of honey-like consistency, until finally a glass strand melts off, which consists of a core and cladding. After the quartz glass that is not suitable for the fiber production drips off, the so-called "draw bulb" is formed under the influence of gravity. The conically tapering transition area between the quartz glass cylinder and the drawn-off fiber, whose form and dimensions depend on the high-temperature furnace and the individual drawing conditions, is referred to as the draw bulb. The glass strand of a diameter of approximately 125 µm, which is continuously drawn off from the preform, then passes through the coating system, which applies the protective sheath (coating) and is located in the drawing tower directly below the diameter testing device, so that finally the fiber is placed on a supply drum and stored temporarily.

After a length of optical fiber, which is dependent on the size or mass of the preform, is drawn, the production must be interrupted and the consumed preform must be replaced by a new one. Frequently, more than one hour elapses until the production of fiber with the required characteristics resumes. During this start-up time, the dripping off of the quartz glass mass that cannot be used takes place as well as the shaping of the draw bulb that satisfies the drawing conditions. The shaping of the draw bulb alone takes approximately 30 to 40 minutes.

US-A-2 736 141 describes, as best shown in Figure 4 thereof, a method of manufacturing a glass fiber wherein the fiber preform rod is placed in a draw furnace, heat is supplied via burners, and the fiber is drawn therefrom under tension. The glass fiber is then cooled and wound onto a reel.

JP-A-61-251 536 describes heat-forming the shape of the preform tip to a V-letter shape using an oxy-hydrogen burner. Then the perform is set into the fiber drawing furnace to carry out line drawing. This is said to improve the core/clad ratio of the drawn fiber and cutoff wavelength.

JP-A-07-330 362 describes forming a tip on a preform by heating the tip with a burner and repeatedly contacting the tip with a rotating trowel thus smoothly finishing the tip. This is said to markedly shorten the length of defective glass fibers formed during the time period from the beginning of fiber draw to the point of stabilization of the fiber draw.

### Summary of the Invention

The invention concerns an apparatus for the thermal treatment of an object, which comprises: a thermally insulated heating chamber, whose walls include an upper opening which is used to introduce the object into the heating chamber, an exit opening, which is opposite the upper opening, and at least one lateral opening, wherein the upper opening and the exit opening have a common symmetrical axis that is displaced laterally in the direction of the lateral opening, relative to a longitudinal axis of the heating chamber, the longitudinal axis being oriented parallel to the common symmetrical axis; at least one burner unit, whose flame is used to heat the object and fires onto the object through the lateral opening of the wall.

The apparatus in accordance with the invention permits, for example, the quartz glass mass of an optical fiber preform that is not suitable for fiber drawing to melt off more rapidly than in a conventional furnace without contaminating the preform with foreign particles during this process. Moreover, since preforms including pre-optimized draw bulbs are provided which are already appropriately melted off at the tip, the downtime of an optical fiber drawing apparatus can be considerably shortened.

Preferably, both the heating chamber, which has good heat insulation, and the H₂/O₂ gas burners of the heating furnace, which fire through lateral heating chamber openings onto the preform, are made of quartz glass. Thus, these elements can withstand the temperatures that are generated in the chamber and that reach maximum values of T of about 2500°C in the area of the preform tip, without damage for a longer period of time. With 15-30 kW, the heating capacities of the gas burners are dimensioned in such a way that the tip of the preform, which rotates about its longitudinal axis, melts off in a drop already after approximately 20 minutes and the typical draw bulb is formed. In order to optimize its shape, the preform and/or the burners can be shifted in a vertical direction, relative to one another, according to a preset program.

A contamination of the preform with foreign particles during the melting of the quartz glass mass is extensively ruled out since the combustion gases escape from the heating chamber with excess pressure (dirt does not enter due to the so-called chimney effect) and in any case, SiO₂ particles precipitate on the preform. A slight cooling of the heating furnace may be required to the same degree as a flushing of the heating chamber with a protective gas.

In accordance with another aspect, the invention provides a method for treatment of an optical fiber preform, comprising the steps of heating one end of an optical fiber preform to form a draw bulb on the end of the preform, and transferring the preform to a drawing tower wherein an optical fiber may be drawn therefrom. A quartz glass mass is melted off of the preform that is not suitable for fiber drawing. Preferably, the preform is rotated while heating.

In accordance with another aspect, the invention provides a method for treatment of an optical fiber preform, comprising the step of, prior to drawing, and in a heating chamber separate from a draw chamber of a draw unit, forming a pretreated preform having a draw bulb sufficient to reduce downtime of the draw unit and melting a quartz glass mass off of the preform that is not suitable for fiber drawing within the heating chamber. Preferably, the draw bulb of the preform is formed at a temperature of greater than 1800 °C.

By using appropriately pretreated preforms, that is, preforms that have optimized draw bulbs, which have already melted off at the tip, it is possible to advantageously reduce the down time of a glass fiber drawing unit by up to 15-30 minutes per replaced preform. In particular, since the high temperature draw furnace of the drawing tower needs to melt less quartz glass mass this results in shorter heating-up and internal heating times. Further, the transition phase between the melting and the fiber drawing takes considerably less time at the theoretical rate (the main time savings) thus the draw towers are in operation more of the time. This is particularly true when the draw bulb is produced off-line in a separate heating furnace. Also, it is not necessary to move the preform as deep into the high temperature furnace (time savings because of the generally low feed rate).

### Brief Description of the Drawings

The invention is further explained below with reference to the accompanying drawings.
Fig. 1 illustrates a cross-sectioned side view of an embodiment of a heating furnace for the thermal treatment of a preform in accordance with the invention.
Fig. 2 illustrates a cross sectional view of the heating furnace of Figure 1, taken along the line A-A.
Fig. 3 is a top cross sectional view illustrating the temperatures attained within the heating furnace during the operation.
Fig. 4 illustrates a top partially sectioned view of the structure of a quartz glass burner in accordance with the invention.
Fig. 5 and 6 illustrate various schematic top views the holder of the quartz glass burner in accordance with the invention.
Fig. 7 illustrates a flow diagram of the method steps in accordance with the invention.

### Detailed Description of the Preferred Embodiment

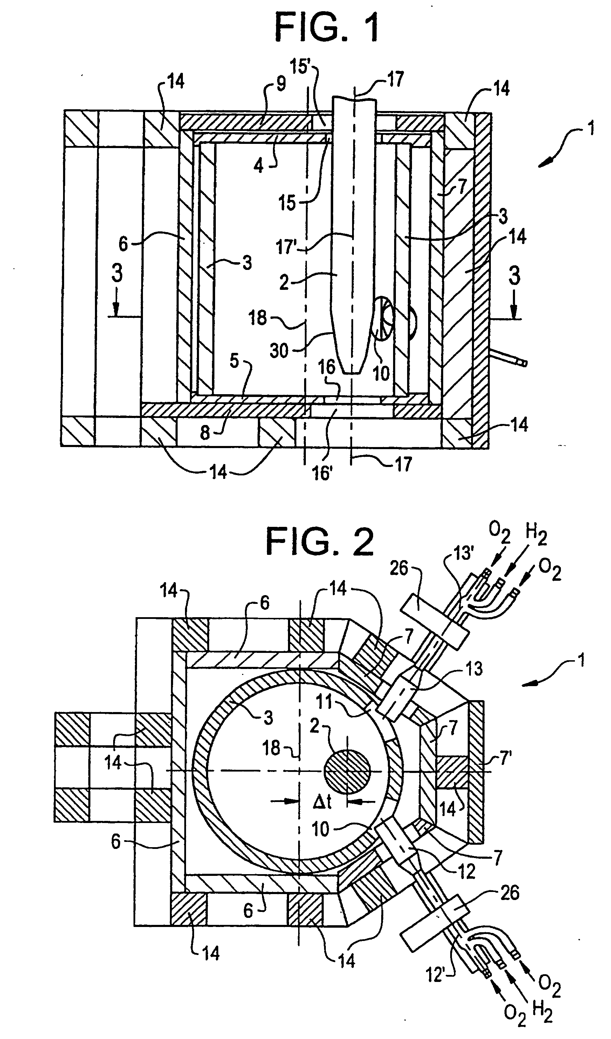

The heating furnace 1, shown schematically in Figures 1 and 2, is used for the melting off of the quartz glass mass of the preform 2, that is not suitable for the fiber drawing. This furnace 1 is preferably a separate unit from the draw tower and is used to produce the draw bulb 30 on the preform, such that when it is transferred to the draw tower, the time needed to commence drawing is reduced. This reduction is due to the draw bulb having already been formed in the previous heating furnace. Essentially, the heating furnace 1 has a cylindrical heating chamber 3-5, heat insulation 6-9 surrounding the heating chamber 3-5 on all sides, several gas burners 12-13 firing onto the preform 2 through lateral heating chamber openings 10-11, and a frame, which fixes the aforementioned components and has of steel or aluminum groove profiles 14, which are square in cross-section and screw into one another. Since the SiO₂ preform 2 softens only after a temperature T of about 1750°C, an appropriately high temperature (T ≥ 1800°C) must be generated in the furnace space, so both the heating chambers 3-5 as well as the flame-producing components (burner tube, nozzles) of the gas burners 12-13 are made of a high temperature-stable material, in particular, quartz glass, which expands longitudinally only slightly during heating. Further, the use of quartz glass has the advantage that there is no contamination of the preform 2 with foreign particles and, at most, SiO₂ particles are precipitated.

The heating chamber 3-5 preferably has a cylindrical SiO₂ middle part 3 (a height h of approximately 470 mm, radius of about 180 mm, and wall thickness d of about 30 mm), that is provided with the gas burner openings 10-11 (with a diameter of about 80 mm), and two quartz glass lids 4/5, which are hexagonal and whose edge projections are adapted to the placement configuration of the heating furnace. The preform 2 (includes a diameter between about 40-120 mm), which is already preferably preheated to a temperature T in the range of between about 600°C -800°C in a separate heating furnace, is introduced through a circular opening 15 of the upper lid 4 into the heating chamber 3-5 and is moved downwards until the conically tapering tip of the preform 2 is in the plane defined by the burner openings 10-11. The quartz glass dripping off from the preform 2, which rotates about its longitudinal axis, arrives at a collecting apparatus, which is not depicted, through a circular opening 16 of the lower heating chamber lid 5.

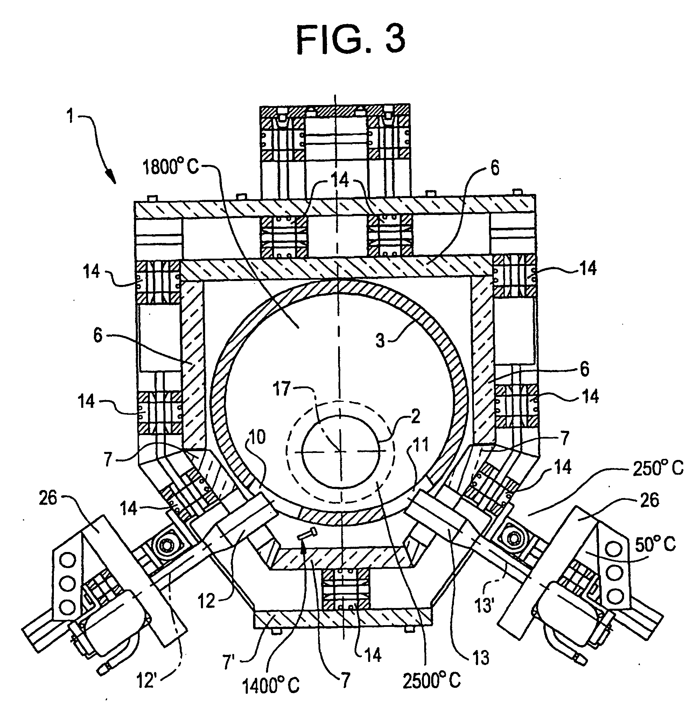

The upper and the lower heating chamber openings 15-16 have a common symmetrical axis 17, which is oriented parallel to the heating chamber longitudinal axis 18 and is shifted laterally (offset) with respect to it, in the direction of the gas burners 12-13. The axis distance designated with Δt in Figure 2 is dimensioned hereby in such a way that the preform 2 is located in the hottest point of the flames and its distance to the adjacent heating chamber wall is still sufficiently large. At the same time, the preform 2, situated in this manner, prevents the direct firing of the heating chamber wall, opposite the gas burners 12-13, which considerably reduces its thermal load. In the hottest point of the flame, adjacent to the position of the preform, the temperature reaches a value T of about 2500°C (See Figure 3); in the rest of the interior chamber of the furnace-that is, outside the flames, the temperature reaches a value of T = 1600-1800°C. With values around T = 1400°C, the maximum temperature measured at the outer chamber wall is sufficiently low so as to ensure a high service life of the heating furnace.

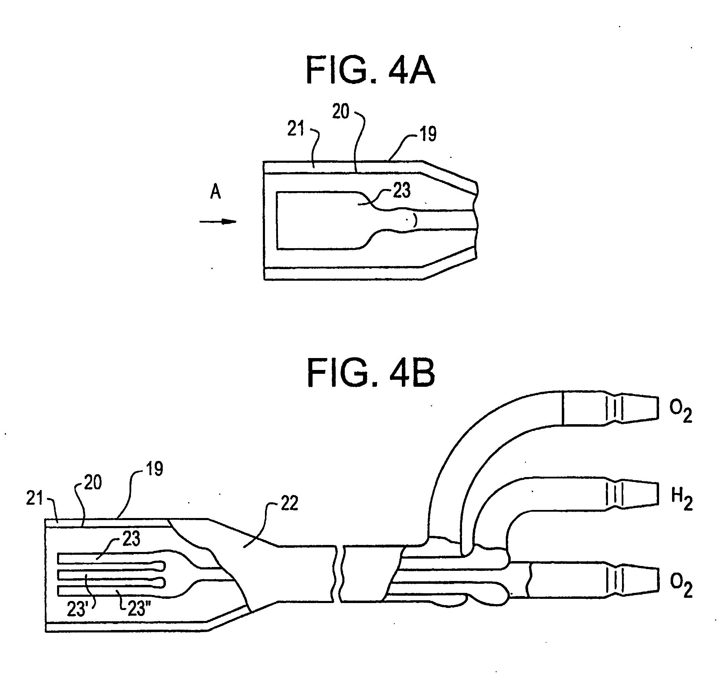

The heating capacity of the gas burners 12-13 is a of maximum 60 kW during operation, and more typically approximately 20-30 kW. The gas burners 12-13 are supplied with hydrogen and oxygen gases, which are conducted separately to the burners 12-13 via two O₂ connections ("outer" and "inner" oxygen) and an H₂ connection (See Figures 2 and 4). As Figure 4 shows, the outer oxygen is conducted to the burner tip via an annular nozzle 21, which is formed by the two cylindrical parts 19-20 of the gas burners 12-13. The inner oxygen is conducted into several flat nozzles 23,23',23" that are oriented parallel and located in the center of the burner head 22; and the hydrogen is conducted into the space between the flat nozzles 23,23',23" and the cylindrical part 20. As already mentioned, all components of the gas burner are made of quartz glass.

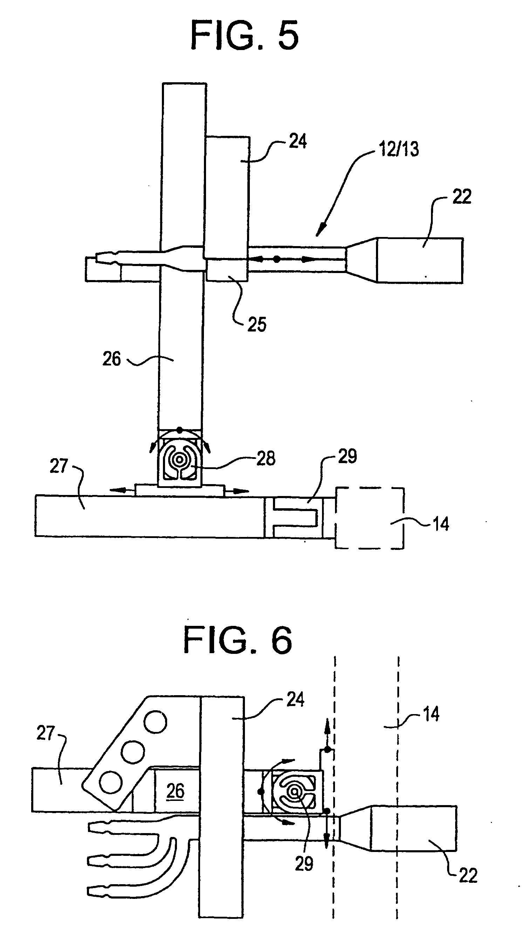

The holder of the gas burner 12,13 depicted in Figures 5 and 6 is comprised of an upper part 24 and a lower part 25 that are connected in a detachable manner to the upper part 24, between which the gas burner 12,13 is firmly clamped or, by means of loosening a screw connection, can be guided in the direction of the double arrow. In order to be able to orient the gas burner 12,13 with respect to the preform 2, the holder is connected via a rack, which has several groove profiles 26,27 and elbows 28,29, to the frame 14 of the heating furnace. Since the holder 24,25 is also supposed to protect the silicone hoses, which bring the hydrogen and the oxygen to the corresponding burner connections, from the heat radiation of the heating furnace, it is made of a material with good heat insulation, in particular, a mixture of mica lamellae, moscovites, phlogopite, and silicone resin.

The heat insulation 6-9 surrounds the heating chamber walls 3-5 of the heating furnace 1 on all sides (see Figures 1 and 2). In the embodiment example shown, the insulation has a middle part 6,7 which forms a hexagon, and two plate-like lids 8,9 provided with recesses 15',16'. The two lids 8,9 (having a thickness of about 20 mm) are preferably made of quartz glass. The corresponding plate-like elements of the middle part 6,7 have a thickness of about 30 mm and are made of a fireproof and oxidation-resistant insulating material that has low thermal conductivity, in particular, glass fiber or ceramic fiber material. One particularly suitable material, for example, has the tradename DOTHERM™ by DOTHERM - Isolierwerkstoffe, 44293 Dortmund, which contains the essential components of calcium silicates, special portland cements, carbon microfibers, organic fibers, and mineral binders and additives. Depending on the type, these insulating materials, which can be processed with normal hard metal tools and can be supplied in the form of plates in different sizes and thicknesses, can also withstand temperatures T > 1000° C (DT 1100 and DT 1200). Their thermal conductivity is about 0.114 (DT 1100) or 0.08 W/mK (DT 1200). The heat insulation 7' (preferably DT 1100), located between the gas burners 12,13 serves to protect the personnel during the loading of a preform 2 into the heating furnace 1.

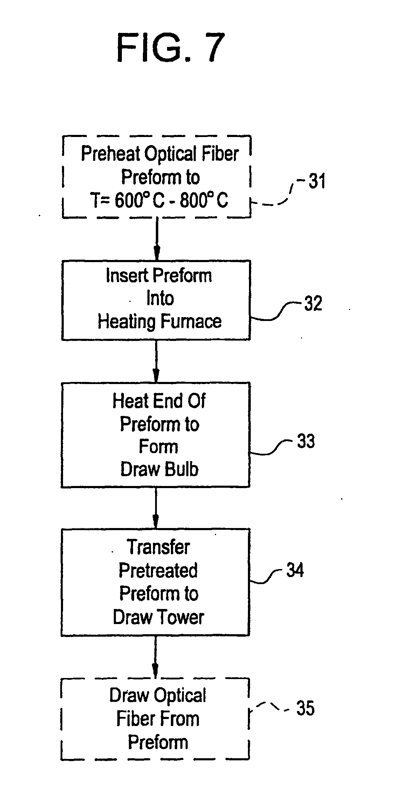

In operation, as best described in Fig. 7 is illustrated in the flow chart of the method in accordance with the invention, the preform 2 is first preferably preheated to between about 600°C and 800°C in step 1 labeled 31. The preform 2 is then inserted into the heating furnace 1 in step 2 labeled 32. Within the heating chamber 3-5 as described in step 3 labeled 33, the preform 2 is heated as heretofore described to form a draw bulb 30 thereon. After this, the pretreated preform having a draw bulb 30 formed thereon is transferred to a draw furnace of a draw tower as described in step labeled 34. The draw bulb 30 formed on the end of the preform 2 is sufficient to reduce the resultant draw time required to draw a fiber from the preform in step labeled 35. In particular, if the draw bulb 30 is preoptimized, in that it is shaped appropriately to facilitate faster draw fiber thereform, the time savings during the draw process may be 30-50 minutes.

It will be apparent to those of ordinary skill in the art that various modifications an variations can be made to the present invention without departing from the scope of the claims. For example, it is readily possible to equip the heating furnace 1 with only one H₂/O₂ burner of an appropriate capacity, or also with more than two burners, wherein the lateral burner openings should be located in the lower half, in particular, in the lower third of the heating chamber. Optionally, for example, the burners may be appropriately adapted to operate with other combustible gases also, in particular, with natural gas, acetylene, butane, methane, or propane. Furthermore, the diameter of the openings 15,16, in the upper and in the lower heating chamber lids 4,5 may be selected so that they are up to 100% larger than the cross sectional area of the preform 2. Furthermore, in some cases, the openings 15, 15', 16, 16' may be other than circular. i.e., adapted to the shape of the material to be treated. The burners may optionally be situated such that the burner axes 12'/13' are positioned at an angle that differs from 90°, relative to the longitudinal axis 17' of the preform 2. Further yet, it may be advantageous to provide a non-cylindrical heating chamber 3. Moreover, other high temperature-resistant ceramic material may be employed instead of quartz glass. Additionally, the design of the lid, insulation, and rack may be round or other suitable shapes. Thus, it is intended that the present invention cover the modifications and variations provided they come within the scope of the appended claims.

## Claims

1. Apparatus for the thermal treatment of an object (2), comprising:
(a) a thermally insulated heating chamber (3-5), whose walls include an upper opening (15) which is used to introduce the object (2) into the heating chamber (3-5), an exit opening (16), which is opposite the upper opening (15), and at least one lateral opening (10, 11), wherein the upper opening (15) and the exit opening (16) have a common symmetrical axis (17) that is displaced laterally in the direction of the lateral opening (10, 11), relative to a longitudinal axis (18) of the heating chamber, the longitudinal axis (18) being oriented parallel to the common symmetrical axis (17);
(b) at least one burner unit (12, 13), whose flame is used to heat the object (2) and fires onto the object (2) through the lateral opening (10, 11) of the wall.

2. The apparatus according to Claim 1 wherein the heating chamber (3-5) includes a middle part (3) provided with the lateral opening (10-11), and the middle part (3) is made of a material which exhibits a melting temperature above about 1500°C and whose coefficient of thermal expansion is smaller than 10⁻⁶ per °C.

3. The apparatus according to Claim 2 wherein the middle part (3) of the heating chamber and at least the flame producing components of the burner unit (12, 13) are made of the same material.

4. The apparatus according to Claim 3 wherein the middle part (3) of the heating chamber and the flame producing components of the burner unit (12, 13) are made of quartz glass or ceramic.

5. The apparatus according to Claim 2 wherein the middle part (3) of the heating chamber is closed off at the end, by two plate-like elements (4, 5) provided with the upper opening (15) and the exit opening (16), respectively.

6. The apparatus according to Claim 5 wherein the plate-like elements (4, 5) and the middle part (3) are made of the same material.

7. The apparatus according to Claim 1 wherein a dimension of the upper opening and the exit opening (16) are at most 100% larger than the maximum diameter of the object (2).

8. The apparatus according to Claim 2 **characterized in that** the middle part (3) has a cylindrical shape.

9. The apparatus according to Claim 1 further comprising several burner units (12, 13), whose flames fire onto the object (2) through a lateral opening (10, 11) of the heating chamber (3-5).

10. The apparatus according to Claim 9 wherein the lateral openings (10, 11) in the lower half of the heating chamber (3) corresponding to the burner units (12, 13) are located in a plane, which is oriented approximately vertical to a longitudinal axis (18) of the heating chamber in the areas of a chamber wall close to the object.

11. The apparatus according to Claim 1 wherein the burner unit (12, 13) operates on H₂/O₂, natural gas, acetylene gas, butane gas, methane gas, or propane gas.

12. The apparatus according to Claim 1 wherein the burner units (12, 13) or a flame-producing element (20, 22) therein are oriented to the symmetrical axis (17), which is defined by the upper opening (15) and the exit opening (16) and is laterally displaced relative to a longitudinal axis (18) of the heating chamber.

13. A method for treatment of an optical fiber preform (2), comprising the steps of:
a) heating one end of an optical fiber preform (2) to form a draw bulb (30) on the end of the preform (2);
(b) melting a quartz glass mass off of the preform (2) that is not suitable for fiber drawing; and
(c) transferring the preform (2) to a drawing tower wherein an optical fiber may be drawn therefrom.

14. The method of claim 13 further comprising rotating the preform (2) while heating.

15. The method of claim 13 wherein the step of heating is accomplished by at least one gas burner (12 or 13) firing onto the preform (2).

16. The method of claim 15 wherein the step of heating is accomplished by a plurality of gas burners (12, 13) firing onto the preform (2).

17. The method of claim 13 wherein the step of heating is accomplished by flames which fire onto the preform (2) through a lateral opening (10 or 11) in a heating chamber.

18. The method of claim 13 further comprising preheating the preform (2) prior to inserting the preform (2) into a heating chamber (3-5).

19. The method of claim 13 wherein prior to the heating step, the preform (2) is inserted into a heating chamber (3-5) by passing the preform (2) through an upper opening (15) of a plate-like element of the heating chamber (3-5).

20. A method for treatment of an optical fiber preform, comprising the steps of: prior to drawing, and in a heating chamber (3-5) separate from a draw chamber of a draw unit, forming a pretreated preform (2) having a draw bulb (30) sufficient to reduce downtime of the draw unit, and melting a quartz glass mass off of the preform (2) that is not suitable for fiber drawing within the heating chamber (3-5).

21. The method of claim 20 further comprising forming the draw bulb (30) at a temperature of greater than 1800 °C.

22. The method of claims 20 or 21, further comprising the step of introducing the preform into the heating chamber (3-5) of a heating furnace, prior to placing the preform (2) into a high-temperature furnace of a glass fiber drawing unit, and
performing the step of melting off a quartz glass mass of the preform (2) in the heating furnace to provide a pre-treated optical fiber preform.

23. The method of claim 22, wherein the step of melting off a quartz glass mass of the preform is performed such that the quartz glass mass drips off from the preform (2).

## Patentansprüche

1. Vorrichtung zur Wärmebehandlung eines Objekts (2), umfassend:
(a) eine wärmeisolierte Heizkammer (3-5), deren Wände eine zur Einführung des Objekts (2) in die Heizkammer (3-5) dienende obere Öffnung (15); eine der oberen Öffnung (15) gegenüberliegende Austrittsöffnung (16) und mindestens eine seitliche Öffnung (10, 11) aufweist, wobei die obere Öffnung (15) und die Austrittsöffnung (16) eine gemeinsame Symmetrieachse (17) haben, die bezüglich einer Längsachse (18) der Heizkammer seitwärts in Richtung der seitlichen Öffnung (10, 11) versetzt ist, wobei die Längsachse (18) parallel zur gemeinsamen Symmetrieachse (17) orientiert ist;
(b) mindestens eine Brennereinheit (12, 13), deren Flamme zum Aufheizen des Objekts (2) verwendet wird und durch die seitliche Wandöffnung (10, 11) auf das Objekt (2) feuert.

2. Vorrichtung nach Anspruch 1, wobei die Heizkammer (3-5) einen mit der seitlichen Öffnung (10-11) versehenen Mittelteil (3) umfasst und der Mittelteil (3) aus einem Material gefertigt ist, dessen Schmelztemperatur über einem Wert von etwa 1500 °C liegt und dessen Wärmeausdehnungskoeffizient kleiner als 10⁻⁶ pro °C ist.

3. Vorrichtung nach Anspruch 2, wobei der Mittelteil (3) der Heizkammer und zumindest die flammenerzeugenden Komponenten der Brennereinheit (12, 13) aus dem gleichen Material gefertigt sind.

4. Vorrichtung nach Anspruch 3, wobei der Mittelteil (3) der Heizkammer und die flammenerzeugenden Komponenten der Brennereinheit (12, 13) aus Quarzglas oder Keramik gefertigt sind.

5. Vorrichtung nach Anspruch 2, wobei der Mittelteil (3) der Heizkammer am Ende durch zwei plattenförmige Elemente (4, 5) abgeschlossen ist, die mit der oberen Öffnung (15) bzw. der Austrittsöffnung (16) versehen sind.

6. Vorrichtung nach Anspruch 5, wobei die plattenförmigen Elemente (4, 5) und der Mittelteil (3) aus dem gleichen Material gefertigt sind.

7. Vorrichtung nach Anspruch 1, wobei eine Abmessung der oberen Öffnung und der Austrittsöffnung (16) höchstens 100 % größer ist als der Maximaldurchmesser des Objekts (2).

8. Vorrichtung nach Anspruch 2, wobei der Mittelteil (3) eine zylindrische Form hat.

9. Vorrichtung nach Anspruch 1, weiterhin mit mehreren Brennereinheiten (12, 13), deren Flammen durch eine seitliche Öffnung (10, 11) der Heizkammer (3-5) auf das Objekt (2) feuern.

10. Vorrichtung nach Anspruch 9, wobei die den Brennereinheiten (12, 13) entsprechenden seitlichen Öffnungen (10, 11) in der unteren Hälfte der Heizkammer (3) in einer Ebene angeordnet sind, die in den objektnahen Bereichen einer Kammerwand annähernd senkrecht zu einer Längsachse (18) der Heizkammer orientiert ist.

11. Vorrichtung nach Anspruch 1, wobei die Brennereinheit (12, 13) mit H₂/O₂, Erdgas, Acetylengas, Butangas, Methangas oder Propangas betrieben wird.

12. Vorrichtung nach Anspruch 1, wobei die Brennereinheiten (12, 13) oder ein flammenerzeugendes Element (20, 22) in ihnen auf die Symmetrieachse (17) ausgerichtet sind, die durch die obere Öffnung (15) und die Austrittsöffnung (16) gegeben und relativ zu einer Längsachse (18) der Heizkammer seitlich versetzt ist.

13. Verfahren zur Behandlung einer Lichtleitfaser-Vorform (2) mit den Schritten:
(a) Erhitzen eines Endes einer Lichtleitfaser-Vorform (2), um eine Ziehzwiebel (30) am Ende der Vorform (2) auszubilden;
(b) Abschmelzen einer nicht für das Faserziehen geeigneten Quarzglasmasse von der Vorform (2); und
(c) Umsetzen der Vorform (2) in einen Ziehturm, in dem aus ihr eine Lichtleitfaser gezogen werden kann.

14. Verfahren nach Anspruch 13, weiterhin mit einer Rotation der Vorform (2) beim Erhitzen.

15. Verfahren nach Anspruch 13, wobei der Heizschritt durch mindestens einen auf die Vorform (2) feuernden Gasbrenner (12 oder 13) ausgeführt wird.

16. Verfahren nach Anspruch 15, wobei der Heizschritt durch mehrere auf die Vorform (2) feuernde Gasbrenner (12, 13) ausgeführt wird.

17. Verfahren nach Anspruch 13, wobei der Heizschritt durch Flammen ausgeführt wird, die durch eine seitliche Öffnung (10 oder 11) in einer Heizkammer auf die Vorform (2) feuern.

18. Verfahren nach Anspruch 13, weiterhin mit einem Vorheizen der Vorform (2) vor dem Einsetzen der Vorform (2) in eine Heizkammer (3-5).

19. Verfahren nach Anspruch 13, wobei die Vorform (2) vor dem Heizschritt in eine Heizkammer (3-5) eingesetzt wird, indem die Vorform (2) durch eine obere Öffnung (15) eines plattenförmigen Elements der Heizkammer (3-5) durchgesteckt wird.

20. Verfahren zur Behandlung einer Lichtleitfaser-Vorform mit den Schritten:
Herstellen einer vorbehandelten Vorform (2) in einer von einer Zieheinheit der Ziehkammer getrennten Heizkammer (3-5) vor dem Ziehen, wobei die Vorform eine für das Verringern der Stillstandszeit der Ziehkammer ausreichende Ziehzwiebel (30) aufweist, und Abschmelzen einer nicht für das Faserziehen in der Heizkammer (3-5) geeigneten Quarzglasmasse von der Vorform (2).

21. Verfahren von Anspruch 20, weiterhin mit einer Herstellung der Ziehzwiebel (30) bei einer Temperatur von mehr als 1800 °C.

22. Verfahren nach den Ansprüchen 20 oder 21, weiterhin mit dem Schritt des Einsetzens der Vorform in die Heizkammer (3-5) eines Heizofens, bevor die Vorform (2) in einen Hochtemperaturofen einer Glasfaser-Zieheinheit eingesetzt wird, und
Ausführen des Schritts des Abschmelzens einer Quarzglasmasse von der Vorform (2) im Heizofen, um eine vorbehandelte Lichtleitfaser-Vorform zu erhalten.

23. Verfahren nach Anspruch 22, wobei der Schritt des Abschmelzens einer Quarzglasmasse von der Vorform so ausgeführt wird, dass die Quarzglasmasse von der Vorform (2) abtropft.

## Revendications

1. Dispositif de traitement thermique d'un objet (2), comprenant:
(a) une chambre (3 à 5) de chauffage qui est isolée thermiquement et dont les parois incluent une ouverture (15) supérieure utilisée pour introduire l'objet (2) dans la chambre (3 à 5) de chauffage, une ouverture (16) de sortie qui est opposée à l'ouverture (15) supérieure, et au moins une ouverture (10,11) latérale, l'ouverture (15) supérieure et l'ouverture (16) de sortie ayant un axe (17) de symétrie qui est commun et qui est décalé latéralement dans la direction de l'ouverture (10, 11) latérale par rapport à l'axe (18) longitudinal de la chambre de chauffage, l'axe (18) longitudinal étant disposé parallèlement à l'axe (17) de symétrie commun ;
(b) au moins une unité (12, 13) de brûleur dont la flamme est utilisée pour chauffer l'objet (2) et est dirigée sur l'objet (2) en passant par l'ouverture (10, 11) latérale de la paroi.

2. Dispositif suivant la revendication 1, dans lequel la chambre (3 à 5) de chauffage comprend une partie (3) médiane munie de l'ouverture (10 et 11) latérale, et la partie (3) médiane est en un matériau qui a un point de fusion supérieur à 1500°C environ et dont le coefficient de dilatation thermique est plus petit que 10⁻⁶ par °C.

3. Dispositif suivant la revendication 2, dans lequel la partie (3) médiane de la chambre de chauffage et au moins les éléments de production de la flamme de l'unité (12, 13) de brûleur sont en le même matériau.

4. Dispositif suivant la revendication 3, dans lequel la partie (3) médiane de la chambre de chauffage et les éléments de production de la flamme de l'unité (12, 13) de brûleur sont en verre au quartz ou en céramique.

5. Dispositif suivant la revendication 2, dans lequel la partie (3) médiane de la chambre de chauffage est fermée à l'extrémité par deux éléments (4, 5) analogues à des plaques, munis respectivement de l'ouverture (15) supérieure et de l'ouverture (16) de sortie.

6. Dispositif suivant la revendication 5, dans lequel les éléments (4, 5) analogues à des plaques et la partie (3) médiane sont en le même matériau.

7. Dispositif suivant la revendication 1, dans lequel une dimension de l'ouverture supérieure et une dimension de l'ouverture (16) de sortie sont supérieures d'au plus 100 % au diamètre maximum de l'objet (2).

8. Dispositif suivant la revendication 2, **caractérisé en ce que** la partie (3) médiane a une forme cylindrique.

9. Dispositif suivant la revendication 1 comprenant en oùtre plusieurs unités (12, 13) de brûleurs dont les flammes sont dirigées sur l'objet (2) en passant par une ouverture (10, 11) latérale de la chambre (3 à 5) de chauffage.

10. Dispositif suivant la revendication 9, dans lequel les ouvertures (10, 11) latérales ménagées dans la moitié inférieure de la chambre (3) de chauffage correspondant aux unités (12, 13) de brûleurs sont disposées dans un plan qui est orienté à peu près verticalement par rapport à un axe (18) longitudinal de la chambre de chauffage dans les zones d'une paroi de la chambre proches de l'objet.

11. Dispositif suivant la revendication 1, dans lequel l'unité (12, 13) de brûleur fonctionne au H₂/O₂, au gaz naturel, au gaz acétylène, au gaz butane, au gaz méthane ou au gaz propane.

12. Dispositif suivant la revendication 1, dans lequel les unités (12, 13) de brûleurs ou un élément (20, 22) de production de la flamme qui s'y trouve sont orientés sur l'axe (17) de symétrie, qui est défini par l'ouverture (15) supérieure et par l'ouverture (16) de sortie, et qui est décalé latéralement par rapport à un axe (18) longitudinal de la chambre de chauffage.

13. Procédé de traitement d'une préforme (2) de fibre optique comprenant les stades qui consistent :
a) à chauffer une extrémité d'une préformé (2) de fibre optique pour former un bulbe (30) de tirage à l'extrémité de la préforme (2) ;
b) à séparer de la préforme (2) par fusion une masse de verre au quartz qui ne convient pas pour un tirage de fibre ; et
c) à transférer la préforme (2) à une tour de tirage dans laquelle une fibre optique peut en être tirée.

14. Procédé suivant la revendication 13 qui consiste en outre à faire tourner la préforme (2) tout en la chauffant.

15. Procédé suivant la revendication 13, dans lequel le stade de chauffage est effectué par au moins un brûleur (12 ou 13) à gaz dont la flamme est dirigée sur la préforme (2).

16. Procédé suivant la revendication 15, dans lequel le stade de chauffage est effectué par une pluralité de brûleurs (12, 13) à gaz dont les flammes sont dirigées sur la préforme (2).

17. Procédé suivant la revendication 13, dans lequel le stade de chauffage est effectué par des flammes qui sont dirigées sur la préforme (2) en passant par une ouverture (10 ou 11) latérale ménagée dans la chambre de chauffage.

18. Procédé suivant la revendication 13 consistant en outre à préchauffer la préforme (2) avant d'introduire la préforme (2) dans la chambre (3 à 5) de chauffage.

19. Procédé suivant la revendication 13, dans lequel, avant le stade de chauffage, on insère la préforme (2) dans une chambre (3 à 5) de chauffage en faisant passer la préforme (2) dans une ouverture (15) supérieure d'un élément analogue à une plaque de la chambre (3 à 5) de chauffage.

20. Procédé de traitement d'une préforme de fibre optique, comprenant les stades qui consistent : avant le tirage, et dans une chambre (3 à 5) de chauffage distincte d'une chambre de tirage d'une unité de tirage, à former une préforme (2) prétraitée ayant un bulbe (30) de tirage suffisant pour réduire le temps d'arrêt de l'unité de tirage, et à séparer de la préforme (2) par fusion une masse de verre au quartz qui ne convient pas pour tirer une fibre se trouvant dans la chambre (3 à 5) de chauffage.

21. Procédé suivant la revendication 20 qui consiste en outre à former le bulbe (30) de tirage à une température supérieure à 1800°C.

22. Procédé suivant la revendication 20 ou 21, comprenant en outre le stade qui consiste à introduire la préforme dans la chambre (3 à 5) de chauffage d'un four de chauffage, avant de placer la préforme (2) dans un four à haute température d'une unité de tirage d'une fibre de verre, et
à effectuer le stade de séparation par fusion d'une masse de verre au quartz de la préforme (2) dans le four de chauffage pour fournir une préforme prétraitée de fibre optique.

23. Procédé suivant la revendication 22, dans lequel le stade de séparation par fusion d'une masse de verre au quartz de la préforme est effectué de façon à ce que la masse de verre au quartz s'égoutte de la préforme (2).
